# EUROPÄISCHE PATENTANMELDUNG

(11) **EP 0 695 898 A1**
(43) Veröffentlichungstag der Anmeldung: **07.02.1996**
(21) Anmeldenummer: 94112344.0
(22) Anmeldetag: 05.08.1994
(51) Int. Cl.: F16J 15/10, F16L 23/22

(54) **Flachdichtung und Verfahren zu ihrer Herstellung**

(71) Anmelder: DSI ROHRLEITUNGSBAU-ZUBEHÖR GmbH, D-72147 Nehren (DE)
(72) Erfinder: Paulmann, Herbert, D-95444 Bayreuth (DE)
(74) Vertreter: Steimle, Josef, Dipl.-Ing.

(57) **Zusammenfassung**

Eine Flachdichtung, die aus Fasern, einem Bindemittel sowie gegebenenfalls Füllstoffen besteht und im bereich ihrer Dichtflächen eine gummielastische Dichtwulst aufweist, wodurch sie im montierten Zustand im Kraftnebenschluß liegt, soll im Rahmen ihrer Druckstufeneigung delaminierungs- und ausblassicher, umweltfreundlich, abfallos und wirtschaftlich herstellbar, im Bereich der Medienkontaktzonen verschlossen und sowohl als hochwertige "normale" Dichtung als auch als elektrische Trennstelle sowie als Trennstück verwendbar sein und den Zulassungsbedingungen entsprechen.

Die Flachdichtung ist ein homogener, massegepreßter, allseitig geschlossener Formkörper ohne offene Faserflächen aus einem fasergefüllten , in einer Preßform unter Temperatur- und Druckbeaufschlagung sowie Zeitsteuerung verpreßten Kunststoffgranulat hoher elektrischer Durchschlagsfestigkeit und großer Dielektrizitätskonstanten mit einer der Nennweite und Druckstufe bzw. der Dichtflächenform entsprechenden Anzahl Bolzenöffnungen, Innen- und Außenabmessungen sowie in seine Dichtflächen eingeformter Nut, in die ein Dichtwulst als Dichtraupe aus einem Elastomer mittels einer Feinstdosiereinrichtung einbringbar ist.

## Beschreibung

Die Erfindung betrifft eine Flachdichtung für Dichtflächen Flanschverbindungen aller Art, insbesondere für Rohrleitungen nach DIN, ISO, ANSI u. dgl., die aus Fasern und einem Bindemittel sowie gegebenenfalls Füllstoffen besteht und im Bereich ihrer Dichtflächen eine in einer Nut angeordnete, gummielastische Dichtwulst aufweist, wodurch die Dichtung im montierten Zustand im Kraftnebenschluß liegt.

Aus dem, DE-Prospekt "DSI-Gasket-Seal-Dichtungen", 1000/3/94, DSI Rohrleitungs-15 bau-Zubehör GmbH, D-72147 Nehren, ist eine Flachdichtung der vorbeschriebenen Art bekannt. Diese bekannte Dichtung besteht aus innenlaminiertem Phenol-Harz und wird im Stanz- oder Schneidverfahren aus Plattenware gefertigt. Die Ronden werden dann nach den Abmessungen der entsprechenden DIN- / ANSI-Flansche im Stanzverfahren gelocht und mittels Fräs- oder Drehverfahren mit einer Nut im Bereich der Flanschdichtflächen versehen.

In die Nut wird ein im Spritzgießverfahren hergestellter Formprofilring aus Nitrilkautschuk ( Buna N ) manuell eingeklebt, so daß auf beiden Seiten des Flanschdichtungsträgers ein Dichtwulst entsteht. Dieser Dichtwulst ist so beschaffen, daß er mit zunehmendem Betriebsdruck seine Dichtwirkung verstärkt.

Die Platte, aus der der Flanschdichtungsträger mechanisch herausgearbeitet wird, stellt ein Laminat dar, das unter Druckeinwirkung (Betriebsdruck bzw. mechanische Bearbeitung wie Stanzen, Bohren, Fräsen usw. ) delaminieren kann. Solche Delaminierungen können zu Undichtigkeiten führen, welche insbesondere bei der Abdichtung von brennbaren, gasförmigen und flüssigen Medien zu Schadensfällen erheblichen Ausmaßes beitragen können. Durch das Ausschneiden oder -stanzen der Ronden aus der Plattenware sowie das mechanische Einbringen der Nuten für die Aufnahme des Formprofilringes werden die in dem Bindemittel eingebetteten Fasern angeschnitten. Dadurch stellen sie insbesondere im Bereich der Medienkontaktzonen offene, dem Medienangriff ausgestzte Zonen dar, die eine Kapillarwirkung haben und an denen sich Mikroorganismen festsetzen können. Soll diese bekannte Dichtung als Flanschisolierung eingesetzt werden, so führen diese angeschnittenen Fasern häufig auch zur erheblichen Verringerung der elektrischen Durchschlagsfestigkeit. Darüber hinaus fallen bei der Herstellung dieser Flanschdichtung erhebliche Abfallmengen an, die nicht oder nur unter erheblichem Aufwand weiterverarbeitet werden können.

Aufgabe der Erfindung ist es, eine Flachdichtung der eingangs genannten Art zu schaffen, die im Rahmen ihrer Druckstufeneignung delaminierungs- und ausblassicher, umweltfreundlich und abfallos herstellbar und im Bereich der Medienkontaktzonen verschlossen ist. Darüber hinaus soll die entsprechende Flachdichtung als hochwertige, "normale" Flanschdichtung verwendbar sein, den einschlägigen Zulassungsbedingungen (DVGW, BAM, HTB, KTW, WRC u. a. ) entsprechen, auch als elektrische Trennstelle anwendbar sein und die Funktion von Trennstücken übernehmen können.

Die Erfindung löst diese Aufgabe mit einer Flachdichtung der eingangs genannten Art dadurch, daß die Flachdichtung ein homogener, massegepreßter Formkörper ist mit einer der zugeordneten Nennweite und Druckstufe entsprechenden Anzahl von Bolzenöffnungen, Innen- und Außenabmessungen sowie in seinen Dichtflächen eingepreßter Nut, in die ein Dichtwulst einbringbar ist. Dabei sieht die Erfindung vor, daß der homogene, massegepreßte Formkörper in einer sowohl die Abmessungen der Dichtfläche als auch die Zahl, Größe und Anordnung der notwendigen Bolzenöffnungen sichernden Preßform aus einem Kunststoffgranulat herstellbar ist und gleichzeitig die Nuten in die Dichtflächen einformbar sind.

Nach der Erfindung ist als Dichtwulst ein Elastomer in Form einer Dichtraupe mittels einer Dosiereinrichtung od. dgl. derart in die jeweilige Nut einbringbar, daß auf der gesamten Länge der Dichtwulst das gleiche oder annähernd gleiche Elastomervolumen vorhanden ist. Die Dichtwulst kann z.B. aus einem schwefel- oder peroxidvernetzenden Elastomer bestellen, dem gegebenenfalls ein Vulkanisationsbeschleuniger, ein Vulkanisationsverzögerer oder ein Aktivator beigemischt ist. So kann die Dichtwulst nach der Erfindung auch aus einem raum- oder hochtemperaturvernetzenden Siliconkautschuk bestehen, dem zur Verbesserung der Temperaturbeständigkeit beispielsweise Carborane zugesetzt sind. Dabei ist vorgesehen, daß der Dichtwulst zentrisch oder exzentrisch in der Nut anordbar ist, wobei die Nut so bemessen ist, daß sie den Dichtwulst unter Druck vollständig oder nahezu vollständig aufnimmt.

Das Kunstoffgranulat des massegepreßten Formkörpers ist erfrindungsgemäß fasergefüllt, wobei die Fasern organisch und/ oder anorganisch sind und das Bindemittel ein verpreßbarer Kunststoff ist, der eine hohe elektrische Durchschlagfestigkeit und Dielektrizitätskonstante aufweist, beispielsweise ein Phenoplast oder ein Aminoplast ist.

Weiterhin sieht die Erfindung vor, daß die Kennzeichnung bzw. die Identifikation der Flachdichtung nach DIN ISO 9001 bzw. EN 29001 gleichzeitig mit der Herstellung des massegepreßten Formkörpers vornehmbar ist mittels Stempeln und / oder Gravuren, die in der Preßform zur Herstellung des massegepreßten Formkörpers anordbar sind.

Eine solchermaßen ausgestaltete Flachdichtung wird abfall- und lösungsmittelfrei umweltfreundlich hergestellt und ist gekennzeichnet durch einen allseitig oder weitestgehend allseitig geschlossenen Formkörper ohne offene Faserflächen, keine oder nur geringste Feuchtigkeitsaufnahme und gleichbleibend gute elektrische Isolationseigenschaften; darüber hinaus ist sie im Rahmen ihrer Druckstufeneignung delaminations- und ausblassicher.

Schließlich sieht die Erfindung vor, daß die Flachdichtung unter Mitverwendung von Isolierhülsen und Isolierscheiben zu einer Flanschisolierung als elektrische Trennstelle ausbildbar ist und auch die Funktion von Trennstücken erfüllt mit dem Vorteil der auf ein Minimum reduzierten Baulänge.

Wird die Flachdichtung für Flanschverbindungen nach DIN, ISO, ANSI od. dgl. verwandt, entspricht der Innendurchmesser vorzugsweise der Nennweite. Daneben ermöglicht die Erfindung jedwede beliebige Materialkombination zwischen dem Flachdichtungsträger und der Dichtwulst, beispielweise einen Flachdichtungsträger aus Edelstahl mit einer Dichtwulst aus Fluorsiliconkautschuk. Ebenso ist vorgesehen, daß die Flachdichtung in in einer Preßvorrichtung herstellbar ist, deren Form derjenigen der abzudichtenden Fläche kongruent ist, als jedwede Form haben kann.

Die Erfindung wird nachfolgend anhand der Abbildungen 1 bis 3 näher erläutert; es zeigt
Fig. 1 die Flachdichtung in der Vorderansicht und Draufsicht;
Fig. 2 die Darstellung der Dichtwulst in unbelastetem und druckbeaufschlagten Zustand;
Fig 3 die Flachdichtung zwischen zwei Flanschen, ausgebildet als Flanschisolierung bzw. als Trennstück.

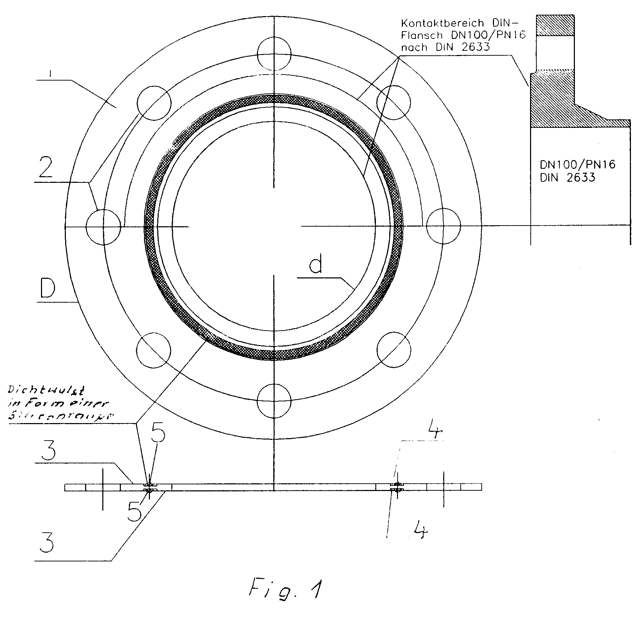

Nach Fig. 1 ist die Flachdichtung 1 als homogener, massegepreßter Formkörper aus einer sowohl die Durchmesser d und D als auch die Zahl, Größe und Anordnung der notwendigen Bolzenöffnungen 2 sichernden Preßform entnehmbar, in der in ihre Dichtflächen 3 gleichzeitig je eine Nut 4 einformbar ist. In die Nut 4 ist mittels einer Dosiereinrichtung ein Dichtwulst 5 aus einem Elastomer in Form einer Dichtraupe einbringbar, die auf der gesamten Dichtwulstlänge gleiches oder annähernd gleiches Elastomervolumen aufweist. Die Nut 4 ist dabei so bemessen, daß der in sie zentrisch oder exzentrisch eingebrachte Dichtwulst 5 unter Druck vollständig oder nahezu vollständig in der Nut 4 aufgenommen wird.

Das Grundmaterial der Flachdichtung 1 ist ein durch organische und/ oder anorganische Fasern gefülltes Kunststoffgranulat, wobei vorzugsweise ein verpreßbarer Kunststoff verwandt wird, der eine hohe elektrische Durchschlagsfestigkeit und große Dielektrizitätskonstante aufweist. Dieses Kunststoffgranulat wird in der Preßform bei definierter Temperatur und voreinstellbarem Forminnendruck zu einem homogenen, massegepreßten Formkörper verpreßt und nach einer definierten Abkühlzeit mit den Dichtwülsten 5 versehen.

Dadurch, daß die beiden Nuten 4 beim Verpressen des Kunststoffgranulats in die Dichtflächen 3 eingeformt werden, muß die Flachdichtung 1 keiner mechanischen Bearbeitung unterzogen werden, wie dies bei der üblichen Herstellung von Dichtungen aus Plattenware erforderlich ist, mit den Vorteilen, daß keine offenen Faserflächen vorhanden sind, wodurch einer Feuchtigkeitsaufnahme und der Bildung von Kapillaren entgegengewirkt wird, daß über die gesamte Dichtung eine gleichbleibend gute elektrische Isolationseigenschaft erreicht und Bakterien keine Festsetzmöglichkeit geboten wird, und daß die Flachdichtung 1 im Rahmen ihrer Druckstufeneignung delaminierungs- und ausblassicher ist.

Die Flachdichtung 1 ist abfall- und lösungsmittelfrei herstellbar und damit wirtschaftlich sowie arbeitsplatz- und umweltfreundlich zu fertigen. Dadurch, daß in der Preßform Stempel und/ oder Gravuren zur Kennzeichnung bzw. Identifikation der Flachdichtung anordbar sind, wird auch den Zertifizierungsanforderungen der DIN ISO 9001 bzw. der EN 29001 entsprochen.

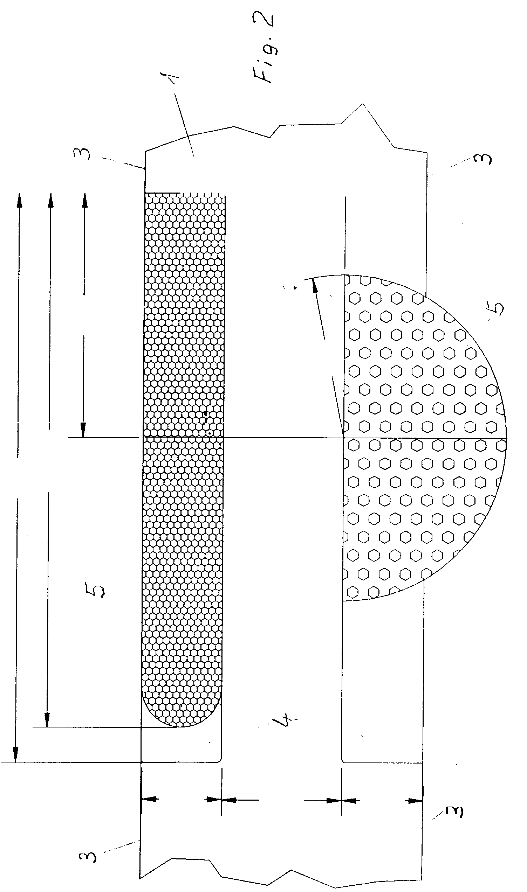

In Fig. 2 ist die Flachdichtung 1 im Bereich der in ihre Dichtflächen 3 eingeformten Nuten 4 dargestellt. Wie ersichtlich, ist der Dichtwulst 5 vorzugsweise exzentrisch in den Nuten 4 angeordnet, die so bemessen sind, daß der Wulst 5 unter Druckeinwirkung von der Nut 4 vollständig oder nahezu vollständig aufgenommen wird.

Die mittels einer regel- und steuerbaren Feinstdosiereinrichtung in die Nut 4 einbringbare Dichtwulst 5 besteht aus einem schwefel- oder peroxidvernetzenden Elastomer, dem gegebenenfalls ein Vulkanisationsbeschleuniger, ein Vulkanisationsverzögerer und / oder ein Aktivator beigemischt ist. Durch das Einbringen der Dichtwulst über eine Feinstdosiereinrichtung entfällt das manuelle Einkleben eines im Spritzgießverfahren hergestellten Formprofilringes. Darüber hinaus kann die Breite und Dicke des Dichtwulstes in weiten Bereichen variiert werden und es ist jede beliebige Träger-/ Dichtwulst-Kombination möglich, beispielsweise Edelstahlträger und Siliconkautschuk als Dichtwulst.

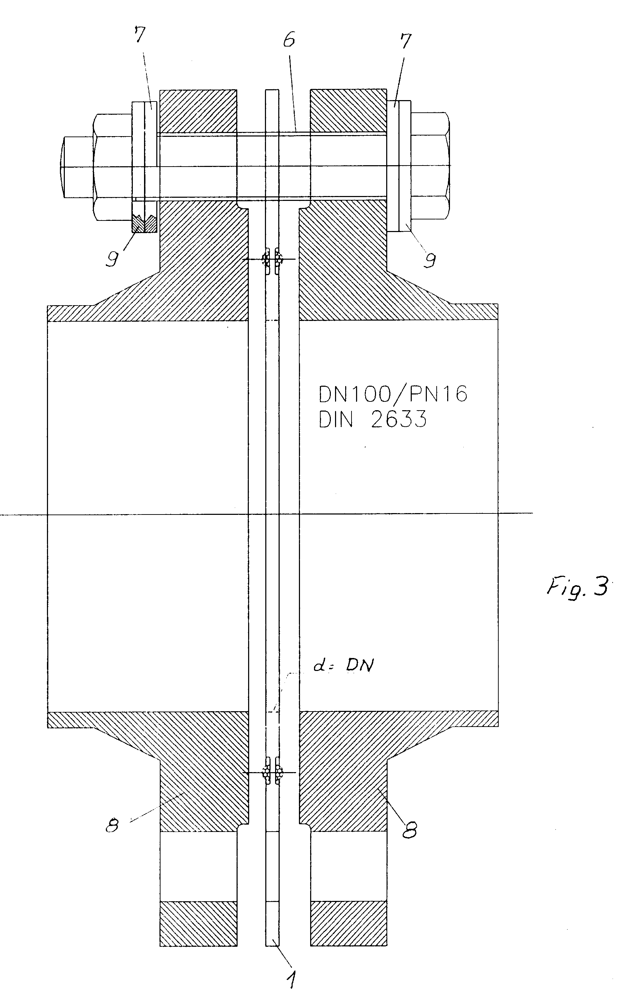

Fig. 3 zeigt die Anordnung der Flachdichtung 1 zwischen zwei Flanschen 8 und ist hier unter Mitverwendung von Isolierhülsen 6, Isolierscheiben 7 und Stahlunterlegscheiben 9 als Flanschisolierung oder bei entsprechend hoher elektrischer Durchschlagsfestigkeit als Isolierstück mit äußerst geringer Baulänge ausgebildet. Der Innendurchmesser d entspricht dabei vorzugsweise der Nennweite DN.

## Patentansprüche

1. Flachdichtung für Dichtflächen und Flanschverbindungen aller Art, insbesondere für Rohrleitungen nach DIN, ISO, ANSI u. dgl., die aus Fasern und einem Bindemittel sowie gegebenenfalls Füllstoffen besteht und im Bereich ihrer Dichtflächen jeweils eine in einer Nut angeordnete, gummielastische Dichtwulst aufweist, wodurch die Dichtung im montierten Zustand im Kraftnebenschluß liegt, **dadurch gekennzeichnet**, daß die Flachdichtung ( 1 ) ein homogener, massegepreßter Formkörper ist.

2. Flachdichtung nach Anspruch 1, **dadurch gekennzeichnet**, daß der homogene, massegepreßte Formkörper mit einer der zugeordneten Nennweite und Druckstufe entsprechenden Anzahl Bolzenöffnungen ( 2 ), Innen- und Außenabmessungen sowie in seinen Dichtflächen ( 3 ) eingepreßter Nut ( 4 ) versehen ist in die ein Dichtwulst ( 5 ) einbringbar ist.

3. Flachdichtung nach den Ansprüchen 1 und 2, **dadurch gekennzeichnet**, daß der homogene, massegepreßte Formkörper in einer sowohl die Abmessungen der Dichtfläche als auch die Zahl, Größe und Anordnung der notwendigen Bolzenöffnungen ( 2 ) sichernden Preßform aus einem Kunststoffgranulat herstellbat ist und gleichzeitig die Nuten ( 4 ) in die Dichtflächen ( 3 ) einformbar sind.

4. Flachdichtung nach den Ansprüchen 1 bis 3, **dadurch gekennzeichnet**, daß das Kunststoffgranulat fasergefüllt ist.

5. Flachdichtung nach Anspruch 4, **dadurch gekennzeichnet**, daß das Kunststoffgranulat organische und / oder anorganische Fasern enthält.

6. Flachdichtung nach den Ansprüchen 1 bis 5, **dadurch gekennzeichnet**, daß das Bindemittel ein verpreßbarer Kunststoff ist, der eine hohe elektrische Durchschlagfestigkeit und Dielektrizitätskonstante aufweist.

7. Flachdichtung nach Anspruch 6, **dadurch gekennzeichnet**, daß der Kunststoff ein duroplastischer Werkstoff wie z.B. ein Phenoplast oder ein Aminoplast ist.

8. Flachdichtung nach Anspruch 6, **dadurch gekennzeichnet**, daß der Kunststoff ein Polyester od. dgl. ist.

9. Flachdichtung nach den Ansprüchen 1 bis 8, **dadurch gekennzeichnet**, daß als Dichtwulst ( 5 ) ein Elastomer in Form einer Dichtraupe mittels einer Dosiereinrichtung derart in die jeweilige Nut ( 4 ) einbringbar ist, daß auf der gesamten Dichtwulstlänge gleiches- oder annähernd gleiches Elastomervolumen erreichbar ist.

10. Flachdichtung nach Anspruch 9, **dadurch gekennzeichnet**, daß die Dichtwulst ( 5 ) aus einem schwefel- oder peroxidvernetzenden Elastomer besteht.

11. Flachdichtung nach den Ansprüchen 9 und 10, **dadurch gekennzeichnet**, daß dem Elastomer ein Vulkanisationsbeschleuniger, ein Vulkanisationsverzögerer oder ein Aktivator beigemischt ist.

12. Flachdichtung nach den Ansprüchen 9 bis 11, **dadurch gekennzeichnet**, daß die Dichtwulst ( 5 ) aus einem raum- oder hochtemperaturvernetzenden Siliconkautschuk besteht.

13. Flachdichtung nach den Ansprüchen 9 bis 12, **dadurch gekennzeichnet**, daß dem Elastomer bzw. Siliconkautschuk Carborane beigemischt sind.

14. Flachdichtung nach der Ansprüchen 1 bis 13, **dadurch gekennzeichnet**, daß die Dichtwulst ( 5 ) zentrisch oder exzentrisch in der Nut ( 4 ) anordbar ist.

15. Flachdichtung nach den Ansprüchen 1 bis 14, **dadurch gekennzeichnet**, daß die Nut ( 4 ) so bemessen ist, daß sie den Dichtwulst ( 5 ) unter Druck vollständig oder nahezu vollständig aufnimmt.

16. Flachdichtung nach den Ansprüchen 1 bis 15, **dadurch gekennzeichnet**, daß die Dichtwulst (5) bezüglich ihrer Breite und Dicke in weiten Bereichen variierbar ist.

17. Flachdichtung nach den Ansprüchen 1 bis 16, **gekennzeichnet durch** einen allseitig oder weitestgehend allseitig geschlossenen Formkörper ohne offene Faserflächen, keine oder geringste Feuchtigkeitsaufnahme und gleichbleibend gute elektrische Isolationseigenschaften.

18. Flachdichtung nach den Ansprüchen 1 bis 17, **dadurch gekennzeichnet**, daß sie im Rahmen ihrer Druckstufeneignung delaminations- und ausblassicher ist.

19. Flachdichtung nach den Ansprüchen 1 bis 18, **dadurch gekennzeichnet**, daß die Kennzeichnung bzw. Identifikation der Flachdichtung (1) nach DIN ISO 9001 bzw. EN 29001 gleichzeitig mit der Herstellung des massegepreßten Formkörpers vornehmbar ist.

20. Flachdichtung nach Anspruch 19, **dadurch gekennzeichnet**, daß die Kennzeichnungen bzw. Identifikationen der Flachdichtung (1) mittels Stempeln oder Gravuren durchführbar sind, die in der Preßform zur Herstellung des massegepreßten Formkörpers anordbar sind.

21. Flachdichtung nach den Ansprüchen 1 bis 20, **dadurch gekennzeichnet**, daß sie unter Mitverwendung von Isolierhülsen ( 6 ) und Isolierscheiben ( 7 ) zu einer Flansch-Isolierung als elektrische Trennstelle ausbildbar ist.

22. Flachdichtung nach den Ansprüchen 1 bis 21, **dadurch gekennzeichnet,** daß sie eine elektrische Durchschlagsfestigkeit und Isolationsfähigkeit aufweist, die sie als Trennstück mit minimaler Baulänge verwendbar macht.

23. Flachdichtung nach den Ansprüchen 1 bis 22, **dadurch gekennzeichnet**, daß sie abfall- und lösungsmittelfrei herstellbar ist.

24. Flachdichtung nach den Ansprüchen 1 bis 23, **dadurch gekennzeichnet**, daß der Innendurchmesser ( d ) der Nennweite DN entspricht.

25. Flachdichtung nach den Ansprüchen 1 bis 24, **gekennzeichnet durch** jedwede beliebige Materialkombination zwischen dem Flachdichtungsträger (1) und der Dichtwulst ( 5).

26. Flachdichtung nach den Ansprüchen 1 bis 25, **dadurch gekennzeichnet**, daß sie in einer Preßvorrichtung herstellbar ist, deren Form derjenigen der abzudichtenden Fläche kongruent ist.

27. Verfahren zur Herstellung einer Flachdichtung nach den Ansprüchen 1 bis 26, **dadurch gekennzeichnet**, daß man für die Fertigung einer homogenen, massegepreßten Flachdichtung ( 1 ) eine der Nennweite und Druckstufe bzw. der Form der abzudichtenden Fläche entsprechend gestaltete Preßvorrichtung verwendet, in der man eine der Nennweite und Druckstufe bzw. Flächenform entsprechende Anzahl von die Bolzenöffnungen ( 2 ) in der Flachdichtung (1) nach Anordnung, Größe und Zahl ausbildende Stempel anordnet und mit in die Dichtflächen ( 3 ) der Flachdichtung ( 1) Nuten ( 4) einformenden Profilen versieht, und daß man in die so gestaltete Preßform ein fasergefülltes Kunststoffgranulat einfüllt und in dieser unter Temperatur- und Druckbeaufschlagung bei zeitlicher Steuerung zu einem homogenen Formkörper verpreßt.

28. Verfahren nach Anspruch 27, **dadurch gekennzeichnet**, daß man den Formkörper aus der Preßform entnimmt und nach Ablauf einer Abkühlzeit in die eingeformten Nuten ( 4 ) einen Dichtwulst ( 5 ) einbringt.

29. Verfahren nach den Ansprüchen 27 und 28, **dadurch gekennzeichnet**, daß man als Dichtwulst ( 5 ) ein Elastomer mittels einer Feinstdosiereinrichtung derart in die Nuten ( 4 ) einbringt, daß die Dichtwulst ( 5 ) auf ihrer gesamten Länge ein gleiches oder annähernd gleiches Elastomervolumen aufweist.

30. Verfahren nach den Ansprüchen 27 bis 29, **dadurch gekennzeichnet**, daß man die Dichtwulst ( 5 ) bezüglich ihrer Breite und Dicke in weiten Bereichen wählbar zentrisch oder exzentrisch in die Nuten ( 4 ) einbringt.

31. Verfahren nach den Ansprüchen 27 bis 30, **dadurch gekennzeichnet**, daß man die Nut ( 4 ) so gestaltet, daß sie den in sie eingebrachten Dichtwulst ( 5 ) bei dessen Druckbeaufschlagung vollständig oder nahezu vollständig aufnimmt.

32. Verfahren nach den Ansprüchen 27 bis 31, **dadurch gekennzeichnet**, daß man das durch organische und / oder anorganische Fasern gefüllte Kunststoffgranulat bei definierten Temperaturen und unter definiertem Preßform-Innendruck bei zeitlicher Steuerung zu einem homogenen Formkörper verpreßt, und daß man in die eingeformten Nuten ( 4 ) ein schwefel- oder peroxidvernetzendes Elastomer einbringt.

33. Verfahren nach den Ansprüchen 27 bis 31, **dadurch gekennzeichnet**, daß man das durch organische und / oder anorganische Fasern gefüllte Kunststoffgranulat bei definierten Temperaturen und unter definiertem Preßform-Innendruck bei zeitlicher Steuerung zu einem homogenen Formkörper verpreßt, und daß man in die eingeformten Nuten ( 4 ) einen raum- oder hochtemperatrurvernetzenden Siliconkautschuk einbringt.

34. Verfahren nach den Ansprüchen 32 und 33, **dadurch gekennzeichnet**, daß man die Dichtwulst ( 5 ) nacheinander unter Einhaltung einer definierten Vernetzungs- oder Vulkanisationszeit und / oder Aufrechterhaltung der erforderlichen Temperaturen in die Nuten ( 4 ) einbringt.

35. Verfahren nach den Ansprüchen 27 bis 34, **dadurch gekennzeichnet**, daß man eine Preßvorrichtung verwendet, deren Form derjenigen der abzudichtenden Fläche kongruent ist.
